Europäisches Patentamt

European Patent Office

Office européen des brevets

(11) Veröffentlichungsnummer: **0 315 974**
**A1**

## EUROPÄISCHE PATENTANMELDUNG

(21) Anmeldenummer: 88118661.3

(22) Anmeldetag: 09.11.88

(51) Int. Cl.⁴: **B23K 3/02** , **G05D 23/19** , **B23K 3/04**

(30) Priorität: 10.11.87 DE 3738155

(43) Veröffentlichungstag der Anmeldung:
17.05.89 Patentblatt 89/20

(84) Benannte Vertragsstaaten:
DE FR GB IT

(71) Anmelder: ZEVA GMBH
Postfach 1220
D-3548 Arolsen(DE)

(72) Erfinder: Pachschwöll, Heino
Brudermühle
D-3549 Twistetal-Ndr. Waroldern(DE)

(74) Vertreter: Dipl.-Phys.Dr. Manitz
Dipl.-Ing.Dipl.-Wirtsch.-Ing. Finsterwald
Dipl.-Phys. Rotermund Dipl.-Chem.Dr. Heijn
B.Sc.(Phys.) Morgan
Robert-Koch-Strasse 1
D-8000 München 22(DE)

(54) **Lötvorrichtung, bestehend aus mindestens einem Lötkolben.**

(57) Eine Lötvorrichtung,bestehend aus mindestens einem Lötkolben (19) mit einem Heizelement (21) und einem einen Temperaturfühler (22) aufweisenden Regelkreis zur Regelung der Arbeitstemperatur des Lötkolbens (19) auf einen vorgebbaren Sollwert (51), ist gekennzeichnet durch eine am Lötkolben (19) angeschlossene, den zeitlichen Temperaturverlauf des Lötkolbens (19) zumindest vorübergehend speichernde Schaltung (45) sowie durch eine Überwachungsschaltung (14), welche an der Speicherschaltung angeschlossen ist. Die Überwachungsschaltung überwacht während des Betriebs des Lötkolbens die Unter- bzw. Überschreitung vorgebbarer oberer und unterer Temperaturschwellen (52, 53) und löst ein Alarmsignal aus, wenn die Dauer der Unter- bzw. Überschreitung einen vorgegebenen Wert übersteigt.

Fig.1

Die vorliegende Erfindung betrifft eine Lötvorrichtung, bestehend aus mindestens einem Lötkolben mit einem Heizelement und einem einen Temperaturfühler aufweisenden Regelkreis zur Regelung der Arbeitstemperatur des Lötkolbens auf einen vorgebbaren Sollwert.

Solche Lötvorrichtungen sind weit verbreitet und werden für die verschiedensten Lötaufgaben an elektrischen Schaltungen, Schaltungplatinen usw. eingesetzt, vor allem wenn relativ kleine Stückzahlen benötigt sind. Solche kleine Stuckzahlen sind jedoch häufig in technischen Gebieten anzutreffen, wo das höchste Maß an Zuverlässigkeit erwünscht ist, z.B. in der Luft- und Raumfahrttechnik.

Bisher verfügten die einzelnen Lötstationen neben der bekannten Temperaturregelung lediglich über eine zusätzliche Betriebsanzeige. Präzisionslötungen an hochempfindlichen Bauteilen erfolgten daher folglich nur bei visueller Erfassung der Momentanwerte und im Vertrauen auf die Funktion der Regelung.

Da in der Luft- und Raumfahrt sowie in Reaktortechnik als Beispiele für typische Anwendungsfälle in der Hochsicherheitstechnik mehr und mehr die Forderung erhoben wird, den Arbeitsablauf und die Arbeitsbedingungen zu dokumentieren, wurde bei den bisherigen Arbeitsmethoden erheblicher Zeitaufwand erforderlich, um diese Forderungen zu erfüllen. Erschwerend kommt hinzu, daß unter normalen Fertigungsbedingungen mehrere Arbeitsplätze parallel mit derartigen Aufgaben als Arbeitsgruppe - also Löt- oder Reparaturgruppebeschäftigt sind. Es ist deshalb bisher erforderlich, daß die wichtigen Lötparameter jeweils an den einzelnen Lötplätzen erfaßt werden. Das macht aber einen großen Aufwand an Meßeinrichtungen und an personellem Einsatz erforderlich.

Der Anmelderin ist aufgefallen, daß dieser Aufwand eigentlich gar nicht nötig ist und sie hat sich daher die Aufgabe gesetzt, eine Lötvorrichtung der eingangs genannten Art so weiterzuentwickeln, daß qualitativ hochwertige Lötungen, sogenannte Präzisionslötungen zuverlässig mit einfachen Mitteln unter Beibehaltung der herkömmlichen Lötkolben durchgeführt und überwacht werden können. Auch soll eine Dokumentation des Lötablaufes an einzelnen Lötstationen ohne weiteres möglich sein.

Um diese Aufgabe zu lösen, wird eine Lötvorrichtung der eingangs genannten Art gekennzeichnet durch eine am Lötkolben angeschlossene, den zeitlichen Temperaturverlauf des Lötkolbens zumindest vorübergehend speichernde Schaltung, sowie durch eine Überwachungsschaltung, welche an der Speicherschaltung angeschlossen, während des Betriebs des Lötkolbens, aus dem gespeicherten Temperaturverlauf die Unter- bzw. Überschreitung vorgebbare obere und untere Temperaturschwellen überwacht und ein Alarmsignal dann auslöst, wenn die Dauer der Unter- bzw. überschreitung einen vorgegebenen Wert übersteigt.

Die Erfindung geht daher von der Erkenntnis aus, daß Qualitätsmangel an gelöteten Bauteilen entstehen, wenn der Lötkolben während der Lötung für eine bestimmte Zeitdauer zu kalt oder zu heiß ist und nutzt die Temperaturerfassung an der Arbeitsspitze des Lötkolbens, deren Erfassung sowieso für die Regelung erforderlich ist, für eine zusätzliche Aufgabe, nämlich um den zeitlichen Temperaturverlauf an der Arbeitsspitze festzustellen, zu speichern und auszuwerten. Mit anderen Worten liegt der Erfindung die Erkenntnis zugrunde, daß alle Fehler im gesamten Lötsystem, die zu einer qualitativ minderwertigen Lötung fuhren könnten, schließlich eine Temperaturänderung an der Arbeitsspitze des Lötkolbens verursachen. Fällt z.B. die Temperaturregelung auch nur vorübergehend aus, so entsteht eine Temperaturänderung an der Arbeitsspitze des Lötkolbens. Sollte ein Halbleiterbauteil in der Regelung durchschmelzen, so daß der Lötkolben ständig weiter aufgeheizt wird, entsteht ein Temperaturanstieg, der mittels der erfindungsgemäßen Vorrichtung festgestellt und signalisiert wird, und zwar unmittelbar nach dem Auftreten des Fehlers.

Die erfindungsgemäße Lötvorrichtung zeichnet sich vorzugsweise aus, durch einen am Lötkolben angeschlossenen Mikroprozessor, welcher die Temperaturregelung durchführt, und die über den Temperaturfühler ermittelten Temperaturwerte der Speicherschaltung zuführt.

Diese Anordnung macht es möglich den Arbeitsverlauf genau zu erfassen, wobei die genaue Überwachung beliebig gewählt werden kann durch Austauschen von dem Mikroprozessor zugeordneten Eproms.

Der Lötkolben mit Mikroprozessor und Speicherschaltung bilden zusammen eine Lötstation, welche allein oder mit anderen gleichartigen Lötstationen über einen Datenbus an einer zentralen Befehls- und Registriereinheit angeschlossen werden kann, welche einen die Überwachungsschaltung bildenden Mikrocomputer sowie einen Bildschirm und einen Drucker enthält, wodurch der Temperaturverlauf an den einzelnen Lötstationen anzeigbar und ausdruckbar ist.

Mit dieser Anordnung können mehrere Lötstationen überwacht und das Ergebnis der Überwachung jederzeit angezeigt bzw. ausgedruckt werden, so daß eine permanente Aufzeichnung der jeweiligen Temperatur verläufe an den einzelnen Lötstationen erhältlich ist.

Vorzugsweise weist die Befehls- und Registriereinheit eine Tastatur bzw. eine Dateneingabeeinrichtung auf, die zur Eingabe der erwünschten Löttemperatur an die einzelnen Lötstationen sowie der oberen und unteren Temperaturschwellen für die bzw. für jede Lötstation besonders ausgebildet ist.

Dies hat den großen Vorteil, daß die wichtigen Betriebsparameter auf der Zentraleinheit eingegeben werden und der jeweiligen Lötstation, d.h. dem jeweiligen Arbeitsplatz zugeteilt werden. Eine Manipulation am einzelnen Arbeitsplatz scheidet damit aus. Die Tastatur dient weiterhin zum Abrufen von gespeicherten Daten bzw. für die Eingabe von Sonderdaten, z.B. den Namen der einzelnen Betriebspersonen an den einzelnen Lötstationen und Angaben zu der durchgeführten Arbeit, z.B. die jeweiligen Nummern der Schaltungsplatinen, die an diesen Stellen gelötet werden.

Die bzw. jede Lötstation weist vorzugsweise ein lokales Netz (LAN) auf, mittels dem sie mit dem Mikrocomputer über den Datenbus kommuniziert.

Der Datenbus ist vorzugsweise eine Einzeldatenleitung und das lokale Netz sowie der Mikrocomputer sind vorzugsweise derart ausgelegt, daß sie miteinander mittels eines CSMA/CD-Busprotokoll kommunizieren können. Dies sind einfache, in der Computertechnik etablierte Maßnahmen, die eine Kommunikation zwischen verschiedenen Mikroprozessoren untereinander ermöglichen.

Jede Lötstation enthält vorzugsweise ein jeweiliges Eprom-Modul, in dem die Software für die Temperaturregelung, für die Speicherung des Temperaturverlaufes, für das lokale Netz und für die Diagnose von in der Lötstation entstehenden Störungen gespeichert sind. Auf diese Weise werden Störungen, die in der Lötstation selbst entstehen, der zentralen Befehls- und Registriereinheit über den Datenbus gemeldet, so daß das Alarmsignal von der zentralen Befehls- und Registriereinheit herausgegeben wird. Das Alarmsignal kann ein visueller und/oder akustischer Alarm sein. Die entsprechende Lötstation wird auf dem zentralen Bildschirm einwandfrei bezeichnet, so daß die technische Leitung entsprechende Maßnahmen treffen kann.

Weitere Störungen, z.B. Unterbrechungen in der Zuleitung bzw. Unterbrechungen in der Kommunikation zwischen den einzelnen Lötstationen der Zentraleinheit werden über eine in der Befehls- und Registriereinheit eingebaute Fehlerdiagnose festgestellt und ebenfalls angezeigt und benannt.

In den einzelnen Lötstationen ist vorzugsweise ein von der Betriebsperson zu betätigender Schalter vorhanden, mit dem der Anfang bzw. das Ende jeder Lötaufgabe dem Mikrocomputer angezeigt werden kann. Dies stellt eine einfache Maßnahme dar, die dem Erstellen der Dokumentation für die einzelnen Arbeitsstücke sehr dienlich ist. Der Schalter kann als einfacher Druckschalter ausgebildet werden, könnte natürlich auch durch eine aufwendigere Schalteinrichtung ersetzt werden, z.B. durch einen Laserkopf, der eine Strichkodierung am Werkstück liest, die zur einwandfreien Identifizierung des Arbeitsstückes dient, so daß der Schalter nicht nur den Anfang bzw. das Ende der Lötaufgabe signallisiert, sondern auch den ermittelten Temperaturverlauf einwandfrei in Verbindung mit den einzelnen Arbeitsstücken bringt. Die kodierten Daten, die mittels des Laserkopfes erfaßt werden, werden selbstverständlich dem Mikrocomputer mitgeteilt.

Jede Lötstation ist vorzugsweise am Netz anschließbar, wobei die Frequenz der vom Netz gelieferten Wechselspannung als Taktsignal für die jeweilige Lötstation bzw. den Betrieb des zugeordnete Mikroprozessors dient. Dies stellt eine einfache Maßnahme dar, um die erforderlichen Taktsignale zu erzeugen. Vorzugsweise sind alle Lötstation an der gleichen Netzphase angeschlossen, so daß die Synchronisation ebenfalls gegeben ist.

Eine bevorzugte Ausführungsform zeichnet sich dadurch aus, daß die bzw. jede Lötstation einen die Netzspannung herabtransformierenden Transformator enthält, dessen sekundärer Stromkreis eine Sicherung enthält und über einen Mikroprozessor gesteuerten Schalter, (insbesondere Triac) sowie eine Strommeßvorrichtung an das Heizelement des Lötkolbens angeschlossen ist, daß die Strommeßeinrichtung dem Mikroprozessor den gemessenen Strom mitteilt und daß der Temperaturfühler, der Eprom, die als RAM ausgebildete Speicherschaltung sowie ein Ein-und Ausschalter zur Inbetriebnahme bzw. Außerbetriebsetzung der Lötstation am Mikroprozessor angeschlossen sind.

Weiterhin kann ein den Betriebszustand anzeigendes Lämpchen in der Steuerleitung zwischen dem Mikroprozessor und dem Triac vorgesehen sein. Diese Lage ist von besonderer Bedeutung, da das Ein-und Ausschalten des Triac infolge der Temperaturregelung zu einer blinkenden Anzeige des Lämpchens führt, so daß die Betriebsperson auch eine optische Kontrolle über die normale Funktionsweise seines Lötkolbens hat.

Jede Lötstation verfügt weiterhin vorzugsweise über eine externe Masseverbindung, die bei Bedarf herangezogen werden kann, um elektrostatische Ladungen zu Masse zu führen.

Die Erfindung wird nachfolgend mit Bezugnahme auf eine Ausführungsform, anhand der Zeichnung näher erläutert, die Zeichnung zeigt:

Fig. 1 eine schematische Blockschaltung einer erfindungsgemäßen Lötvorrichtung mit vier Lötstationen,

Fig. 2 eine perspektivische Darstellung einer einzelnen Lötstation mit Lötkolben,

Fig. 3 den gespeicherten Temperaturverlauf an einer bestimmten Lötstation, und

Fig. 4 eine schematische Blockschaltung für eine einzelne Lötstation.

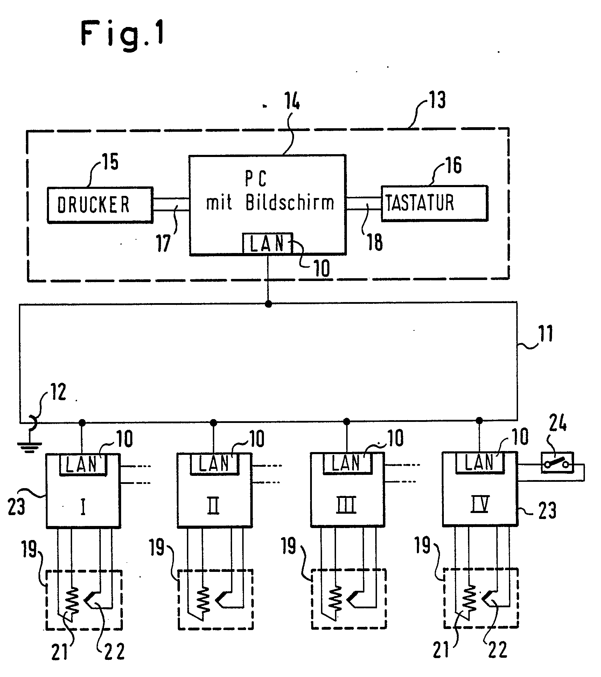

Wie in Fig. 1 gezeigt, umfaßt die erfindungsgemäße Lötvorrichtung vier einzelne Lötstationen I, II, III, IV, die jeweils über ein eigenes lokales Netz 10 an einer Ringleitung 11 angeschlossen sind. Die Ringleitung 11 ist als Einzeldrahtleitung mit einem geerdetem Schirm 12 ausgebildet. Eine zentrale Befehls- und Registriereinheit 13 ist ebenfalls an die Ringleitung 11 angeschlossen und zwar über ein eigenes lokales Netz 10. Die zentrale Befehls- und Registriereinheit 13, die als gestrichelter Kasten in Fig. 1 angedeutet ist, besteht aus einem Mikrocomputer und ist in Form eines PC's 14 mit Bildschirm ausgebildet und beinhaltet außerdem einen Drucker 15 und eine Tastatur 16, die über jeweilige Datenleitungen 17, 18 am Mikrocomputer angeschlossen sind.

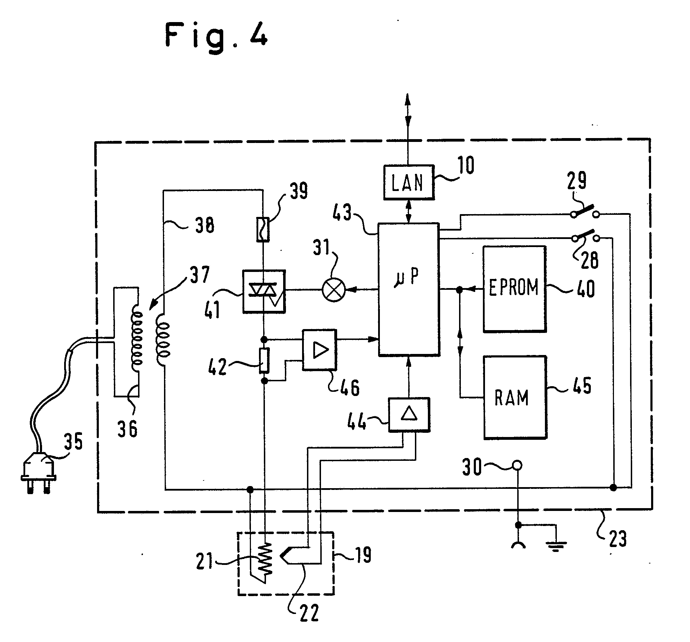

Jede Lötstation I bis IV ist mit einem herkömmlichen Lötkolben 19 ausgestattet, der ein elektrisches Heizelement 21 sowie einen Temperaturfühler 22 aufweist. Die vier quadratisch dargestellten Gehäuse 23 der einzelnen Lötstationen I bis IV beinhalten jeweils einen Mikroprozessor und eine Speicherschaltung, die in Fig. 1 nicht gezeigt sind, jedoch mit Bezug auf Fig. 4 später naher erläutert werden.

Es soll darauf hingewiesen werden, daß die Anzahl der Lötstationen, die an der zentralen Befehls- und Registriereinheit 13 über die Ringleitung 11 angeschlossen werden können, im Prinzip unbegrenzt ist. Die zentrale Befehls- und Registriereinheit kann im einfachsten Fall nur mit einer Lötstation ausgestattet werden, es werden aber üblicherweise mehrere solche Lötstationen angeschlossen. Falls nur eine Lötstation erwünscht ist, so könnte die Elektronik der Lötstation innerhalb des Mikrocomputers der zentralen Befehls- und Registriereinheit realisiert werden.

Schließlich zeigt Fig. 1 bei der Lötstation IV einen manuellen Schalter 24, der von der Betriebsperson betätigt werden kann, jedesmal, wenn sie mit einem neuen Arbeitsstück anfängt bzw. am Ende des jeweiligen Arbeitsstückes, damit der Mikrocomputer 14 den ermittelten Temperaturverlauf aufzeichnen kann. Auch die anderen Stationen I bis III verfügen über einen derartigen Schalter 24, was aber nicht gezeigt ist, um die Darstellung nicht unnötig zu komplizieren. Der Schalter 24 stellt eine bevorzugte Ausfuhrungsform dar, ist aber nicht zwingend erforderlich.

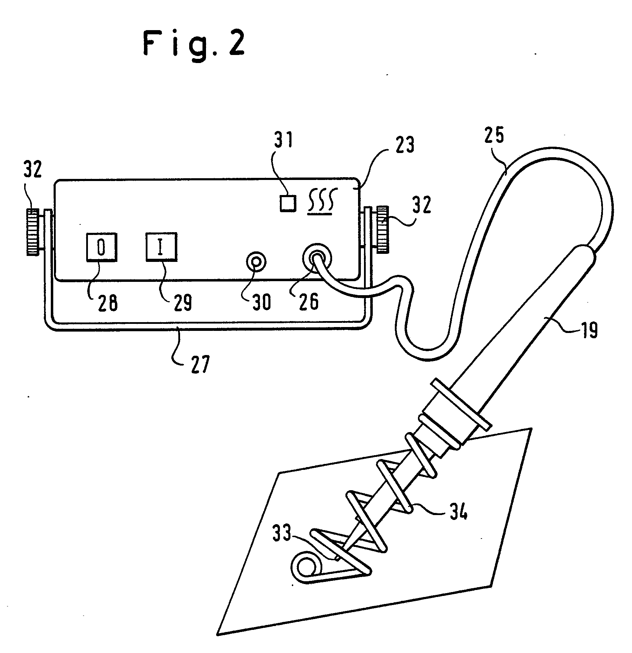

Eine perspektivische Darstellung einer einzelnen Lötstation ist der Fig. 2 zu entnehmen. Wie ersichtlich, wird der Lötkolben 19 über ein biegsames Kabel 25 und einen Stecker 26 mit einer komplementären Buchse am Gehäuse 23 verbunden. Das Gehäuse ist mit einem Bügel 27 verse

hen, der zur Abstützung des Gehäuses 23 dient. Die Lage des Bügels 27 kann mit Rändelknöpfen 32 eingestellt werden. Auf der Vorderseite des Gehäuses 23 sind Ein/AUS-Schalter 28, 29 für die Lötstation sowie ein Lämpchen 31, welches den Betriebszustand anzeigt, und eine externe Masseverbindung 32 zu sehen. Die Arbeitsspitze 33 des Lötkolbens sitzt geschützt in einem Drahtkäfig 34, der aus Drahtwindungen besteht und zur Halterung des Lötkolbens dient. Man sieht, daß die Betriebsperson kein Möglichkeit hat, in der Lötstation irgendwelche Werte festzulegen oder zu ändern. Er kann lediglich die Lötstation ein- und ausschalten mittels der Schalter 28 und 29.

Die elektrische Schaltung innerhalb des Gehäuses 23 ist in der Fig. 4 gezeigt. Mittels eines Netzsteckers 35 wird das Gehäuse am Netz angeschlossen. Die 220V Wechselspannung des Stromnetzes wird an die primäre Seite 36 eines Transformators 37 angelegt und dort auf eine Wechselspannung von $24V_{eff}$ herabtransformiert. In Reihe mit der sekundären Wicklung befinden sich eine Sicherung 39, ein Triac 41, ein Strommeßwiderstand 42 und das Heizelement 21 des Lötkolbens 19. Der Triac 41 dient als Ein/Ausschalter und wird vom Mikroprozessor 43 angesteuert, um hierdurch die Stromzufuhr zu dem Heizelement 21 zu ermöglichen bzw. zu unterbrechen und dadurch die erwünschte Temperatur des Heizelementes 21 und daher des Lötkolbens einzustellen. Die eigentliche Betriebstemperatur wird mittels des Thermofühlers 22 ermittelt und nach Verstärkung in einem Verstärker 44 dem Mikroprozessor 43 mitgeteilt. Der durch das Heizelement fließende Strom wird als Spannungsabfall über den Strommeßwiderstand 42 gemessen und nach Verstärkung in einem Verstärker 25 ebenfalls dem Mikroprozessor mitgeteilt. Das Lämpchen 31, das den Betriebszustand anzeigt, befindet sich in der Steuerleitung des Triacs 41.

Der Sollwert für die Betriebstemperatur des Lötkolbens wird an der Tastatur 16 für die jeweilige Lötstation eingegeben und dem Mikroprozessor 43 über die Ringleitung 11 und dem eigenen lokalen Netz 10 mitgeteilt. Der vom Temperaturfühler 22 gemessene Ist-Wert wird dann durch den Mikroprozessor mit dem Sollwert verglichen und entsprechend der im Eprom 44 gespeicherten Programme wird die Regelung über den Triac 41 vorgenommen.

Die vom Thermofühler 22 ermittelten Temperaturwerte werden in einem bestimmten Zeitraster, z.B. alle 10 ms in einer Speicherschaltung 45 eingelesen und dort vorübergehend gespeichert. Die Speicherung, die nach einem im Eprom 44 gespeicherten Programm erfolgt, macht es möglich, den Temperaturverlauf über einen Zeitraum von etwa 4 Min. abzuspeichern. Nach dieser Zeit werden die gespeicherten Daten automatisch gelöscht, jedoch nicht alle auf einmal, sondern bitweise entsprechend dem Einlesen der jeweils neuen Daten (FIFO).

Der Mikrocomputer der zentralen Befehls- und Registriereinheit 13 ist so programmiert, daß er die einzelnen Lötstationen mit einem vorwählbaren Turnus in Schritten von jeweils einer Sekunde abfragt, d.h. pro Sekunde eine Lötstation, und die im RAM 45 zu dieser Zeit gespeicherten Werte werden in den Hauptspeicher des Mikrocomputers 14 der Befehls- und Registriereinheit eingelesen und festgehalten. Somit reicht durchaus eine vorübergehende Speicherung der Temperaturwerte in dem RAM-Speicher 45 aus. Der angegebene Zeitraum von 4 Min. kann natürlich nach Belieben gewählt werden, es muß aber die Größe der vorhandenen Speicherkapazität und das entsprechende Programmodul des Eproms 44 entsprechend angepaßt werden. Obwohl der Abfragemodus vorzugsweise in Schritten von einer Sekunde erfolgt, können auch diese Schritte nach Belieben länger oder kürzer gewählt werden.

Die Fig. 4 läßt auch die Ein- und Ausschalter 28 und 29 sowie die externe Masseverbindung 32 erkennen.

Der Grund, warum die Speicherkapazität des RAM's 45 für einen etwa 4 Min. langen Temperaturverlauf bemessen ist, während der Mikrocomputer 14 im Sekundentakt die einzelnen Lötstationen abfragt, hat mehrere Gründe. Zunächst bietet diese Speicherung eine Sicherheit gegen eventuelle Störungen. Weiterhin ist es nicht immer wünschenswert, den Temperaturverlauf so genau zu erfassen, z.B. bei Lötaufgaben, wo eine präzise Lötung gar nicht erwünscht ist und bei Lötaufgaben, wo eine Dokumentation des Temperaturverlaufs nicht erforderlich ist. Die Betriebsperson hat aber über den Schalter 24 die Möglichkeit, auch nachträglich die gespeicherten Daten dem Mikrocomputer mitzuteilen, falls sie es für erforderlich hält.

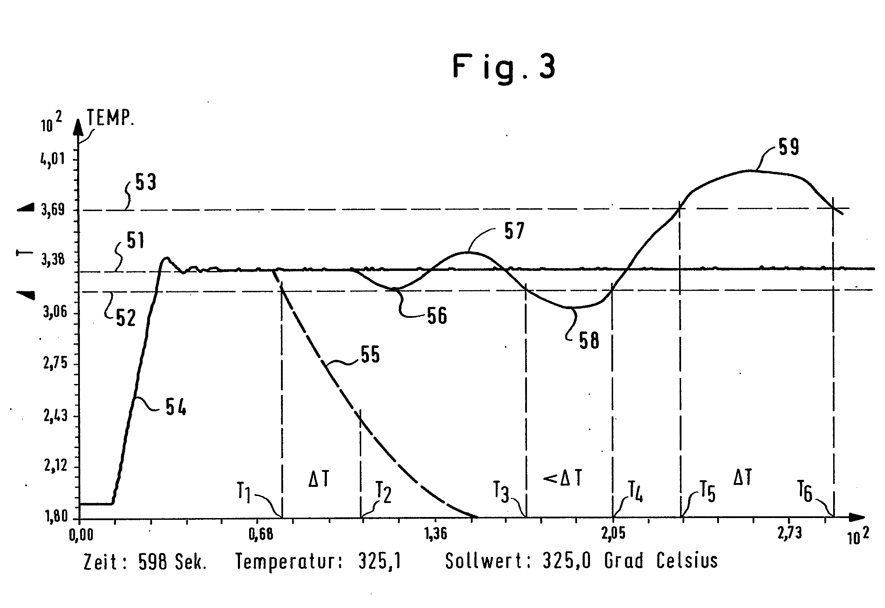

Schließlich wird in Fig. 3 ein Beispiel für den ermittelten Temperaturverlauf angezeigt. Bei der Fig. 3 wird Temperatur auf der senkrechten Achse und Zeit auf der waagrechten Achse aufgezeichnet. Die Zeile 51 zeichnet den Sollwert für die Temperatur von in diesem Fall 325°C. Die Zeilen 52 und 53 bestimmen die untere Temperaturschwelle bzw. und die obere Temperaturschwelle, die nicht unter- bzw. überschritten werden dürfen. Der Sollwert 51 sowie die Temperaturschwellen 52, 53 sind für die jeweilige Lötstation (hier Lötstation IV) über die Tastatur bei der zentralen Befehls- und Registriereinheit 13 einzugeben und können individuell variiert werden.

Solange während des eigentlichen Betriebs des Lötkolbens keine Temperaturschwankungen auftreten, die die Temperaturschwelle 52 unterschreiten bzw. die Temperaturschwelle 53 überschreiten, ist qualitätsmäßig alles in Ordnung und es wird kein Alarmsignal ausgelöst.

Der ursprüngliche starke Anstieg 54 des Temperaturverlaufs erfolgt durch die Aufwärmung beim Einschalten der Lötstation.

Sollte die Sicherung oder das Heizelement durchbrennen, so würde keine elektrische Energie mehr dem Lötkolben zugeführt werden können und dessen Temperatur wird absinken, so wie bei 55 angedeutet. Man sieht, daß die Temperatur zu einem Zeitpunkt $T_1$ die untere Temperaturschwelle unterschritten hat und es wird nunmehr festgestellt, ob nach einer vorbestimmten Zeitdauer $\Delta T$ die mit $T_2$ endet ($T_1 + \Delta T = T_2$), die Temperatur weiterhin unterhalb der Temperaturschwelle liegt. Dies ist bei dem Temperaturverlauf 55 der Fall, es wird von der zentralen Befehls- und Registriereinheit 13 Alarm ausgelöst.

Die Fig. 3 zeigt die Durchführung einer normalen Lötung bei 56. Während des Lötens wird Wärme vom Lötkolben abgezogen und die Kennlinie sinkt ab, jedoch nicht unter die untere Temperaturschwelle 52. Nach Durchführung des Lötens steigt die Betriebstemperatur unter der Wirkung der Regelung an bis sie wieder den Sollwert 51 erreicht hat. Aufgrund der Trägheit des Systems steigt die Temperatur aber weiter, so wie bei 57 gezeigt, erreicht jedoch nicht die obere Temperaturschwelle 53, so daß auch hier keine Störung gemeldet wird.

Anschließend führt die Betriebsperson eine weitere Lötung durch, muß aber durch ungeschickte Handhabung des Lötkolbens zu lange an der Lötstelle bleiben, so daß noch mehr Wärme entzogen wird und die Temperatur sinkt wiederum unter die untere Schwelle 52, so wie bei 58 angedeutet. Dies erfolgt zu einer Zeit $T_3$. Da die Temperatur die untere Schwelle 52 zu einem Zeitpunkt $T_4$ unter Wirkung der Regelung wieder erreicht hat, innerhalb einer Zeitdauer, die kleiner ist als $\Delta T$ ($T_4 - T_3 < \Delta T$) wird diese Unterscheidung nicht als Fehler gemeldet und es erfolgt keine Alarmanzeige.

Es tritt dann ein Fehler bei der Regelung auf, so daß die Temperatur die obere Temperaturschwelle zu einem Zeitpunkt $T_5$ überschreitet. Da diese Temperaturüberschreitung zum einem Zeitpunkt $T_6$ angehalten hat, der größer ist als $\Delta T$, ($T_6 - T_5 > \Delta T$) wird auch hier Alarm gemeldet.

Der ermittelten Temperaturverlauf kann von dem Drucker so ausgedruckt werden wie er in Fig. 3 dargestellt ist, und bildet ein Protokoll über die erfolgten Lötungen. Selbstverständlich können alle anderen wichtigen Angaben zu dem einzelnen Werkstück bzw. zu der Betriebsperson nach Belieben gespeichert werden, dies ist nur eine Frage der Eingabe an der Tastatur bzw. der Programmierung des Mikrocomputers 14.

Die Führungskräfte können auch solche Temperaturverläufe am Bildschirm der zentralen Befehls- und Registriereinheit 13 für die einzelnen Lötstationen abrufen, und können auch über Säulendiagramme oder dergleichen die jeweiligen Betriebsparameter an den einzelnen Lötstationen überwachen. Bei dieser Art der Darstellung werden auf dem zentralen Bildschirm die Soll- und Ist-Werte der einzelnen Stationen nebeneinander angezeigt, so daß von dieser Stelle aus ständig eine zuverlässige Information über die Gesamtsituation gegeben ist. Die Werte werden dabei absolut, d.h. numerisch und gleichzeitg graphisch auf einer Skala angezeigt. Wie bereits angedeutet, können die Toleranzbereiche für die Arbeitsplätze entweder durch entsprechende Eingabe für alle Stationen gleich groß gewählt werden, oder - falls sich das als erforderlich erweisen sollte - können die einzelnen Stationen auch individuell im Toleranzbereich eingestellt werden.

Um den Arbeitsablauf genau zu erfassen, kann jede Station von der Zentrale angewählt werden. Umgekehrt kann auch die Station die Zentrale anwählen, um dort ein Arbeitsprofil über den Kurvenverlauf in Abhängigkeit der jeweiligen Umstände aufnehmen zu lassen.

So können also jederzeit arbeitsspezifische Kennlinien aufgenommen und aufgezeichnet werden. Die Aufzeichnung kann als sogenannte Hardcopy durch einen Drucker ausgedruckt werden.

Mit dieser Art der Werterfassung ist es erstmals möglich, die Situation bei der Herstellung jeder einzelnen Lötstelle auf einer Baugruppe z.B. in Form einer Temperatur-/Zeitfunktion zu erfassen. Das ausgedruckte Dokument kann dann dem Werkstück beigelegt werden. Auf diese Art ist es möglich, später nach Belieben - z.B. bei Ausfall eines Gerätes - Rückgriff auf diese Daten zu nehmen. Sellstverständlich können diese Daten auch in einem Datenspeicher konserviert werden.

Die Meßwerterfassung der Stationen ist ferner so konzipiert, daß alle Daten, ähnlich der Funktion eines Flugschreibers, für einen bestimmten Zeitraum gespeichert werden. Es kann also sowohl vor Beginn des zu definierenden Arbeitsrhythmus, als auch nach dessen Beendigung entschieden werden, ob die Parameter bzw. die Situationen aufgezeichnet werden sollen. Dieser Abruf ist von der Zentrale an allen angeschlossenen Stationen möglich. Ebenso können die einzelnen Stationen durch Anwahl der Zentrale bestimmen, wann und ob ihre jeweiligen Meßdaten und Situationen graphisch als Kurve dargestellt und als Hardcopy ausgedruckt werden sollen.

Die erfindungsgemäße Vorrichtung bietet folgende Vorteile:
- daß die Parameter vom zentralen Befehlsgerät an die einzelnen Stationen in Ausschaltung der Manipulationsmöglichkeit gegeben werden,
- daß in einem vorwählbaren Turnus die Situation und die Parameter aller Stationen im Verbund abgefragt werden,
- daß die Fehler im System analysiert und gekennzeichnet werden,
- daß die Min- und Max-Werte und die jeweils zulässigen Toleranzen parallel eingegeben werden können,
- daß alle Parameter und Situationen simultan auf dem zentralen Bildschirm angezeigt werden,
- daß Abweichungen vom Sollwert über ein akustisches und optisches Warnsystem kenntlich gemacht werden,
- daß die Zeit, bis die Parameterabweichung oder die Normabweichung der Situation gemeldet wird, individuell eingestellt werden kann,
- daß alle Betriebsparameter oder relevanten Situatonszustände graphisch angezeigt werden, um die analogen Zustände darzustellen,
- daß die einzelnen Stationen die Zentrale anwahlen können, um die aktuellen Werte in Form einer Kurvenfunktion darzustellen,
- daß die Zentrale die Stationen anwählen kann, um die jeweiligen Werte zur Erstellung einer Kennlinien- bzw. Kurvenfunktion abzurufen,
- daß die Stationen die Moglichkeit haben, für eine festzulegende Zeit alle Parameter und Betriebszustände zu speichern, um sie bei Bedarf an die Zentraleinheit zu übermitteln,
- daß die Daten bei Nichtabruf, ähnlich wie bei einem Flugschreiber, automatisch wieder gelöscht werden,
- daß über Wahlschaltung festgelegt werden kann, ob die folgenden Daten erfaßt werden oder ob die Vergangenheitsdaten an die Zentrale übermittelt werden sollen,
- daß alle Werte, die auf dem Bildschirm dargestellt werden, auch in Form einer separaten Hardcopy ausgedruckt werden können.

## Ansprüche

1. Lötvorrichtung bestehend aus mindestens einem Lötkolben (19) mit einem Heizelement (21) und einem einen Temperaturfühler (22) aufweisenden Regelkreis zur Regelung der Arbeitstemperatur des Lötkolbens (19) auf einen vorgebbaren Sollwert (51), gekennzeichnet durch eine am Lötkolben (19) angeschlossene, den zeitlichen Temperaturverlauf des Lötkolbens (19) zumindest vorübergehend speichernde Schaltung (45) sowie durch eine Überwachungsschaltung (14), welche an der Speicherschaltung angeschlossen ist, während des Betriebs des Lötkolbens aus dem gespeicherten Temperaturverlauf die Unter- bzw. Überschreitung vorgebbarer oberer und unterer Temperaturschwellen (52, 53) überwacht und ein Alarmsignal dann auslöst, wenn die Dauer der Unter- bzw. Überschreitung einen vorgegebenen Wert übersteigt.

2. Lötvorrichtung nach Anspruch 1, gekennzeichnet durch einen am Lötkolben angeschlossenen Mikroprozessor (43), welcher die Temperaturregelung durchführt und die über den Temperaturfühler ermittelten Temperaturwerte der Speicherschaltung (45) zuführt.

3. Lötvorrichtung nach einem der Ansprüche 1 oder 2, dadurch gekennzeichnet, daß der Lötkolben (19) mit Mikroprozessor (43) und Speicherschaltung (45) eine Lötstation (I bis IV) bildet, welche allein oder mit anderen gleichartigen Lötstationen über einen Datenbus (11) an einer zentralen Befehls- und Registriereinheit (13) angeschlossen ist, welche einen die Überwachungsschaltung bildenden Mikrocomputer (14) sowie einen Bildschirm und einen Drucker (15) enthält, wodurch der Temperaturverlauf an den einzelnen Lötstationen (I bis IV) anzeigbar und ausdruckbar ist, wobei insbesondere eine Tastatur (16) bzw. eine Dateneingabeeinrichtung vorgesehen ist, die einen Teil der Befehls- und Registriereinheit (13) bildet und zur Eingabe der Löttemperatur sowie der oberen und unteren Temperaturschwellen (52, 53) für die bzw. für jede Lötstation (I bis IV) besonders ausgebildet ist.

4. Lötvorrichtung nach Anspruch 3, dadurch gekennzeichnet, daß die bzw. jede Lötstation (I bis IV) ein eigenes lokales Netz aufweist, mittels dem sie mit dem Mikrocomputer (14) über den Datenbus (11) kommuniziert, wobei insbesondere der Datenbus (11) eine Einzeldrahtleitung ist und die lokalen Netze (10) sowie der Mikrocomputer (14) derart ausgelegt sind, daß sie untereinander mittels eines CSMA/CD-Busprotokolls kommunizieren.

5. Lötvorrichtung nach Anspruch 3 oder 4, dadurch gekennzeichnet, daß die bzw. jede Lötstation (I bis IV) ein jeweiliges EPROM-Modul (14) enthält, in dem die Software für die Temperaturregelung, die Speicherung des Temperaturverlaufs, für das lokale Netz (10) und für die Diagnose von in der Lötstation (I bis IV) entstehenden Störungen gespeichert sind.

6. Lötvorrichtung nach einem der Ansprüche 3 bis 5, dadurch gekennzeichnet, daß ein von der Betriebsperson betätigter Schalter (24) vorhanden ist, mit dem der Anfang bzw. das Ende jeder Lötaufgabe dem Mikrocomputer (14) anzeigbar ist.

7. Lötvorrichtung nach einem der Ansprüche 3 bis 6, dadurch gekennzeichnet, daß die bzw. jede Lötstation (I bis IV) am Netz anschließbar ist, wobei die Frequenz der vom Netz gelieferten Wechselspannung als Taktsignal für die Lötstation bzw. den Betrieb des Mikroprozessors (13) dient.

8. Lötvorrichtung nach den Ansprüchen 3 bis 7, dadurch gekennzeichnet, daß die bzw. jede Lötstation einen die Netzspannung herabtransformierenden Transformator (37) enthält, dessen sekundärer Stromkreis (38) eine Sicherung (39) enthält und über einen vom Mikroprozessor gesteuerten Schalter, insbesondere einem Triac (4) sowie einer Strommeßeinrichtung (42) an das Heizelement (21) des Lötkolbens angeschlossen ist, daß die Strommeßeinrichtung (42) dem Mikroprozessor den gemessenen Strom mitteilt und daß der Temperaturfühler (22), der EPROM (44) und die als RAM ausgebildete Speicherschaltung (45) sowie Ein- und Ausschalter (28, 29) zur Inbetriebnahme bzw. Außerbetriebsetzung der Lötstationen (I bis IV) am Mikroprozessor angeschlossen sind.

9. Lötvorrichtung nach Anspruch 8, dadurch gekennzeichnet, daß ein den Betriebszustand anzeigendes Lötlämpchen (31) in der Steuerleitung zwischen dem Mikroprozessor (43) und dem Triac (41) vorgesehen ist.

10. Lötvorrichtung nach einem der Ansprüche 3 bis 9, dadurch gekennzeichnet, daß eine externe Masseverbindung (32) für die bzw. jede Lötstation (I bis IV) vorgesehen ist.

EP 0 315 974 A1

# Fig.1

# Fig. 2

# Fig.3

Zeit: 598 Sek.    Temperatur: 325,1    Sollwert: 325,0 Grad Celsius

EP 0 315 974 A1

# Fig.4

**Europäisches Patentamt**

## EUROPÄISCHER RECHERCHENBERICHT

Nummer der Anmeldung

EP 88 11 8661

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 684 789 (EGGLESTON) <br> * Spalte 4, Zeile 43 - Spalte 6, Zeile 18; Figur 4 * <br> --- | 1-4,8 | B 23 K 3/02 <br> G 05 D 23/19 <br> B 23 K 3/04 |
| A | FR-A-2 592 730 (PERRET) <br> * Seite 7, Zeile 1 - Seite 15, Zeile 4; Figuren 1,2 * <br> --- | 1-5 | |
| A | EP-A-0 202 401 (MUNZ & RITTMANN) <br> * Spalte 2, Zeile 50 - Spalte 4, Zeile 41; Anspruch 1; Figuren 1,2 * <br> ----- | 1 | |
| | | | **RECHERCHIERTE SACHGEBIETE (Int. Cl.4)** <br><br> B 23 K 3/00 <br> G 05 D 23/00 |

Der vorliegende Recherchenbericht wurde für alle Patentansprüche erstellt

| Recherchenort | Abschlußdatum der Recherche | Prüfer |
|---|---|---|
| DEN HAAG | 03-03-1989 | HERBRETEAU D.J-P.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)